# EUROPEAN PATENT SPECIFICATION

(11) **EP 2 609 808 B1**
(45) Date of publication and mention of the grant of the patent: **03.02.2021**
(21) Application number: 12199822.3
(22) Date of filing: 31.12.2012
(51) Int. Cl.: A21D 2/16, A21D 2/36, A21D 2/38, A21D 8/04, A21D 10/00, A21D 13/00

(54) **Improved methods and use relating to the preparation of dough.**
Verbesserte Verfahren und Verwendung betreffend die Herstellung von Teig
Procédés et utilistation améliorées concernant la préparation de pâte

(30) Priority: 29.12.2011 NL 2008057
(43) Date of publication of application: 03.07.2013
(73) Proprietor: Koninklijke Zeelandia Groep B.V., 4301 AA Zierikzee (NL); Zeelandia N.V,, 2160 Wommelgem (BE)
(72) Inventor: VAN STRYDONCK, Christiaan Marie Jozef, 2160 Wommelgem (BE); VAN DEN BOSCH, Vik, 2160 Wommelgem (BE); LIBBRECHT, Joris Hubert, 2160 Wommelgem (BE); POLLEMANS, Johannes Gabriël Adrianus, 4301 AA Zierikzee (NL); DE DREU, Marinus Adriaan, 4301 AA Zierikzee (NL); DONDERS, Bartholomeus Antonius Charles, 4301 AA Zierikzee (NL)
(74) Representative: Patentwerk B.V.

(56) References cited:
- EP-A1- 0 659 344
- EP-A1- 1 080 642
- WO-A1-95/13706
- WO-A1-2010/061412
- WO-A1-2012/072778
- WO-A2-02/060262
- FR-A1- 2 698 761
- GB-A- 176 752
- US-A- 3 506 448
- US-A1- 2004 028 773
- DATABASE GNPD [Online] MINTEL; June 2007 (2007-06), Mintel GNPD: "Sunflower Bread Mix", XP002684088, Database accession no. 727136
- DATABASE GNPD [Online] MINTEL; December 2006 (2006-12), Mintel GNPD: "Pao Certo Flour Improver", XP002684089, Database accession no. 628809
- DATABASE GNPD [Online] MINTEL; January 2011 (2011-01), Mintel GNPD: "Potato Bread Mix", XP002684090, Database accession no. 1476682
- Plasch G.: "Premixes and Complete Mixes", Future of Flour , 2 June 2010 (2010-06-02), pages 287-294, XP002684091, Mühlenchemie GmbH & Co KG Retrieved from the Internet: URL:http://web.archive.org/web/20100602041 059/http://www.muehlenchemie.de/downloads- future-of-flour/FoF_Kap_19.pdf [retrieved on 2012-09-25]
- Alexander Beck ET AL: "Essener Brot Herstellung und Verwendung von Keimlingen in der Bäckerei Inhalt 2", Essener Brot Herstellung, 1 January 2010 (2010-01-01), XP055105045, Retrieved from the Internet: URL:http://orgprints.org/18231/1/ble_fibl_ leitfaden_essenerbrot.pdf [retrieved on 2014-03-03]

## Description

The present invention relates to the production of dough and bakery products. More particularly the present invention provides an improved method for preparing a plurality of doughs of differing composition and the use of an enrichment mixture in preparing a plurality of bakery products of differing compositions.

Bakery products have an important position in the modern human diet. In general any product produced from baked dough (including batter) may be regarded as a bakery product. As such bakery products may include breads, such as pan breads, loafs or buns; pastry, such as cakes, muffins, cookies, pie crusts; crackers, pancakes or waffles.

Within the various kinds of bakery products, there is also a wide variety. For example breads may be produced as white bread, whole wheat bread, maize (corn) bread or multi-cereal bread. In addition various edible particulates, such as grains, seeds, cereals, (dried) fruits, (dried) fruit parts, meal extrudates, meal pellets, spices, herbs and similar enrichments may be added to the bread dough to further enhance the bread varieties. Similarly pastry, such as cakes or cookies may be produced in a wide variety by the inclusion of various enrichments, such as chocolate particles, or other edible particulates, such as grains, seeds, (dried) fruits, (dried) fruit parts. Similar varieties exist or may be contemplated for other bakery products.

This variety of bakery products presents a challenge to bakeries to maximize the product variety produced. In general in bakeries, product variety is obtained by producing a differing dough or batter for each product variety being produced.

It has now been found that a dough or batter comprising edible particulates can be produced more easily by preparing a plain dough by mixing ingredients comprising at least flour and water and optionally a leavening agent and mixing through at least part of the plain dough a composition comprising edible particulates, a number of carbohydrolases and optionally lipids. This alternative method for preparing dough or batter is beneficial when a plurality of dough or batter varieties is to be produced to obtain a corresponding variety of bakery products.

The invention therefore relates to a method for preparing a plurality of doughs of differing composition, preferably doughs or pastry doughs, comprising:
(i) providing an amount of a kneaded dough, the plain dough, prepared by kneading dough ingredients comprising at least flour, a number of water sources, optionally a leavening agent and/or optionally lipids;
(ii) providing a composition, the enrichment mixture, comprising (a) edible particulates selected from one or more grains, seeds, nuts, dried fruits, spices, herbs, pigments or products derived therefrom selected from parts, meals, powders, meal extrudates or meal pellets, (b) number of carbohydrolases, optionally lipids, and/or optionally further bakery additives;
(iii) mixing enrichment mixture through the kneaded plain dough; wherein the kneaded plain dough is divided into a plurality of portions and individual portions of the kneaded plain dough are treated differently by leaving portions of the kneaded plain dough untreated and/or by providing a plurality of enrichment mixtures having differing compositions and mixing differing enrichment mixtures through the portions of the kneaded plain dough.

In the method according to the invention for preparing a bakery product, an amount of a first dough, the plain dough, is provided. The plain dough is prepared by mixing and kneading dough ingredients comprising at least flour and a number of water sources. Within the context of the present invention the term "dough" should be construed to mean any mixture of flour and water suitable for preparing a bakery product. The dough that may be prepared with the method according to the invention includes dough or batter suitable for preparing any bakery product, for example breads, such as pan breads, loafs or buns; viennoiserie; pastry, such as cakes, cookies, muffins, pie crusts; crackers, pancakes or waffles. Preferred bakery products are breads or cakes, most preferably breads.

In general the plain dough may comprise 25-40 wt. %, preferably 25-35 wt %, most preferably 27-33 wt. % water when it is for production of a bakery product selected as bread. When the bakery product to be produced is selected as a pastry product the plain dough may comprise from 10-25 wt. % water. Alternatively the plain dough may comprise from 45-70 wt. %, such as 50-65 wt. %, preferably 55-65 wt. % water.

Doughs having such high water contents may be referred to as batter. A batter may thus be considered to be slackened dough. Batters may also comprise a higher lipid content relative to bread doughs. Batters most commonly find use in the preparation of cakes, cookies, waffles, pancakes, crepes, and the like.

The flour may be of any kind suitable for preparing a selected bakery product. Suitable types of flour include for example flour from wheat, barley, rye or oats. The selection of suitable flour is within the ambit of the skilled person.

Water for the preparation of the plain dough is provided by a number of water sources. Within the present description the term "a number of " should be construed as one or more. A water source is a source of water. The water source may be selected from pure water or any water comprising mixture of compounds comprising over 25 %, preferably over 50 %, more preferably over 60 % most preferably over 80 % by weight water. Examples of such water comprising mixtures may be selected from tap water, eggs, milk, fruits or fruit juices.

For the preparation of the plain dough, the flour is mixed with the number of water sources and any optional ingredient by suitable conventional means. The skilled person will be able to select suitable means for mixing the flour with the water from the water source. The mixing includes kneading. The skilled person will understand how to perform a kneading operation.

Optionally a leavening agent may be mixed with the flour and the number of water sources in the preparation of the plain dough. The use of a leavening agent is preferred. The leavening agent may be selected from biological or chemical leavening agents. Alternatively leavening may be accomplished by aeration of the dough.

Biological leavening agents comprise microorganisms such as yeasts, preferably baker's yeasts.

Chemical leavening agents comprise a chemical carbon dioxide source such as a dihydrogen carbonate source, including a hydrogen carbonate in combination with a proton source such as an acid. The dihydrogen carbonate source may be provided in solid form or in solution. The skilled person will be aware of the chemical equilibria that exist between dissolved carbondioxide, dissolved dihydrogen carbonate and dissolved hydrogen carbonate. Most suitably the chemical leavening agent is provided as baking powder.

Aeration may be accomplished by forcing gas, for example air or carbon dioxide, into the dough. This may be achieved by the use of a mixing technique adequate to force the gas into the dough.

In certain embodiments of the method according to the invention, lipids are used in the preparation of the plain dough. This is preferred for the preparation of a batter. The lipids may be from a vegetable source or from an animal source, such as milk lipids, and may be provided as oil or fat or combinations thereof. Suitable selections for lipid sources are within the ambit of the skilled person. Any amount suitable to prepare dough or a batter may be used. When lipids are used for the preparation of the plain dough they may or may not be used in combination with the optional leavening agent. According to an embodiment both lipids and a leavening agent may be used in the preparation of the plain dough.

In the method according to the invention a composition, the enrichment mixture, comprising a number of edible particulates, carbohydrolases, optionally lipids and optionally further bakery additives is provided. The term "edible particulates" should be understood to mean particulate food components suitable for inclusion in dough, including batter. Such particulate food components preferably are water insoluble, preferably at room temperature. The edible particulates are selected from one or more of grains, seeds nuts, dried fruits, spices, herbs or pigments or products derived therefrom such as parts, meals, powders, meal extrudates or meal pellets. Grains may be selected from wheat, barley, oats, rye, rice, millet, sorghum, teff or pseudo-grains such as buckwheat, amaranth. Seeds may be selected from pumpkin seeds, maize seeds, sunflower seeds, linseed, sesame seed. Nuts may be selected from hazel nuts, walnuts, pecan nuts. Dried fruits may be selected from dried tomatoes or dried apples. Extrudates may be selected from meal extrudates, such as corn meal extrudates. Pellets may be selected from meal pellets, such as soy meal pellets or lupine meal pellets. Spices may be selected from curry etcetera. Herbs may be selected from oregano etcetera. Pigments may be selected from turmeric etcetera.

The edible particulates added to the plain dough may be in a dry state. Therefore, according to certain embodiments, the water content of the enrichment mixture is below the water content of the plain dough. The water content of the enrichments mixture and/or of any of its constituents may be in the range of 5-14 wt. %, such as 5-9 % wt.

In the enrichment mixture the edible particulates are provided together with a number of carbohydrolase, wherein the number of carbohydrolases is selected from an amylase, a xylanase, a cellulase or a combination thereof and preferably is an endo-glucanase. In respect of such carbohydrolases, and in particular xylanases, cellulases and amylases, the inventors have now found that addition of these enzymes facilitates maintaining dough properties after and/or during mixing of the edible particulates in the dough, resulting in maintaining baked product properties. Carbohydrolases may be added in an amount of 0.010 to 0.10 %, such as 0.020 to 0.080, for example 0.025 to 0.055 % by weight to the enrichment mixture. The amount of the carbohydrolase added preferably is such that 150-350, preferably 200-300, such as 230-270 units (U) are added per kg dough.

The enrichment mixture may further comprise further bakery additives such an antioxidant, such as ascorbic acid; gluten, such as wheat gluten; or a salt, such as sodium chloride.

The use of salts, such as sodium chloride in the preparation of dough or batter is known. The main reason for adding a salt is in view of its function as a savoury. When added, salt usually is added in an amount of 0.2 to 1.2 %, such as 0.5 to 0.9 % by weight of the enrichment mixture.

Gluten such as wheat gluten may be added to alter the gluten matrix of the dough. Gluten may be added in an amount of 3 to 12 %, such as 5 to 10 %, for example 7 to 10% by weight of the enrichment mixture.

An antioxidant, such as ascorbic acid may be added to reduce oxidative reactions. Antioxidants may be added in an amount of 0.01 to 0.09 %, such as 0.02 to 0.06 % for example 0.02 to 0.04 % by weight of the enrichment mixture.

In the method according to the invention dough enrichment mixture is mixed through plain dough. This mixing may be executed with any suitable mixing means known to the skilled person. The mixture of plain dough with enrichment mixture may be referred to as enriched dough. According to a preferred embodiment enrichment mixture and plain dough are mixed in a ratio such that the enrichment mixture constitutes 5-30%, preferably 5-20 %, most preferably 10-15% by weight of the enriched dough.

Enriched dough is suitable for use as a dough or batter. Thus the enriched dough as it is may be a commercial product as a bakery intermediate. According to a further aspect enriched dough may be further processed with standard procedures to alternative commercial product such as bread or pastry. Such standard procedures may for example include on or more of portioning enriched dough; incubating enriched dough, or portions therefrom to leaven; freezing enriched dough, or portions therefrom; baking enriched dough, or portions therefrom, packaging enriched dough, or portions therefrom.

In certain embodiments of the method according to the invention, the edible particulates are provided together with lipids. In such embodiments, preferably the edible particulates and lipids are intimately mixed. The lipids preferably are vegetable lipids. The lipids may be provided as oil or fat or combinations thereof. Fats preferably are non-hydrogenated fats. Suitable selections for lipid sources are for example rapeseed oil or palm oil, preferably non-hydrogenated palm oil or combinations thereof. The use of lipids in the enrichment mixture is especially beneficial, if lipids are not used, or used in a low amount, in the preparation of the plain dough, such as when preparing bread dough. The lipids may facilitate mixing of the edible particulates though the plain dough, while maintaining good dough quality.

In respect of relative amounts of edible particulates and lipids the dough enrichment mixture may comprise 95-70, preferably 92-75, more preferably 90-80, most preferably 88-85 wt. % edible particulates and 5-30, preferably 8-25, more preferably 10-20, most preferably 12-15 wt. % lipid.

The method according to the invention is for preparing a plurality of doughs of differing composition. The plain dough is divided into a plurality of portions. A plurality should be construed to mean 2 or more. The individual portions of the plain dough are treated differently with enrichment mixture. For example the differential treatment may be accomplished by leaving portions of the plain dough untreated and/or by providing a plurality of enrichment mixtures having differing compositions and mixing differing enrichment mixtures through the portions of the plain dough such that a plurality of differing enriched doughs is obtained. The differing enrichment mixtures differ in their composition in respect of the selection of edible particulates included in these mixtures. This embodiment thus provides a simple and effective method for preparing doughs of differing composition. Thus making it simple and effective to obtain bakery products of differing composition.

A further aspect of the invention relates to the use of an enrichment mixture comprising a number of edible particulates, a number of carbohydrolases, and optionally further bakery additives. This

A further aspect relates to a method for producing the enrichment mixture This method comprises:
- providing a number of edible particulates;
- providing a number of carbohydrolases;
- optionally providing lipds and/or further bakery additives;
- mixing the edible particulates with the carbohydrolases and optionally the lipds and/or the further bakery additives.

In respect of the technical features of the edible particulates, the carbohydrolases and the optional further bakery additives, again reference is made to the discussion above relating to these components of the enrichment mixture. All alternative and/or preferred embodiments discussed above for the edible particulates, the carbohydrolases and the optional further bakery additives, in relation to the method for preparing an enriched dough, similarly apply and are included in the method for producing the composition according to the invention.

In the method for producing the composition, the edible particulates, the carbohydrolases and the optional further bakery additives are mixed. This mixing may be executed with any suitable mixing means known to the skilled person.

The invention relates to the use of the enrichment mixture in preparing a plurality of bakery products, preferably breads or pastry. As is clear form the discussion above, the composition comprising edible particulates in combination with the carbohydrolases and the optional further bakery additives is a key intermediate product for preparing bakery products. The use according to the invention reflects this. In the use according to the invention the composition is added to dough, including a batter, preferably a white dough.

According to the invention the enrichment mixture is used in preparing a plurality of bakery products of differing compositions as defined in the claims.

The invention will now be further illustrated with reference to the following examples. It should be noted that these examples are only exemplary and by no means restrict the scope of the invention as defined in the claims.

### Example

Four bread dough batches (1-4) were prepared according to the recipe presented in table I below.

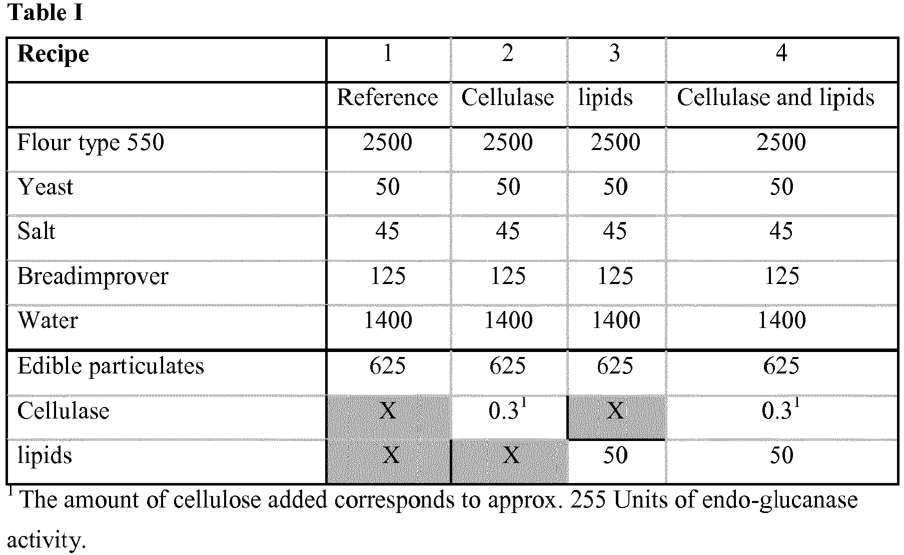

A white plain dough was first prepared by standard dough preparation methods by mixing the flour, water, yeast, salt and bread improver. Kneading commenced during 7 minutes (1^{st} gear) in a spiral mixer (dough temperature 27°C). After this the edible particulates, carbohydrolase and lipids were added (combined additions were added in a mixture) to the white plain dough and kneading commenced until the ingredients were homogeneously mixed. The edible particulate mix comprised brown linseed, corn meal, extruded corn pellets, barley meal, sesame seeds, sunflower seed parts, lupine pellets, millet. The required mixing times were as follows: (1) 2 min 30, (2) 2 min 15, (3) 1 min 55, (4) 1 min 55.

The following protocol was used to prepare breads from the enriched doughs.

### Protocol

| | |
|---|---|
| Dough weight | 880 grams |
| 1^{st} proofing time | 45 minutes |
| Final proofing time | 70 minutes, relative humidity 90% ±5%, temperature 35°C ±2°C |
| Baking temperature | 250°C |
| Steam | yes 0,1 litre |
| Baking time | ± 35 minutes |

The baking results were evaluated with the following techniques: Laser Topography (Texvol AB, Viken, Sweden) for determination of volume; Softness evaluation according to AACC standard 74-09; organoleptical judgement by a trained test panel for the evaluation of Crust Colour, Character, Texture, Softness, Crumb colour and smell/taste (scoring from 0-8). The results are presented in table II below.

**Table II**

| **Dough properties** | 1 | 2 | 3 | 4 |
|---|---|---|---|---|
| Dough temperature in °C | 27 | 27.1 | 26.9 | 26.7 |
| Tight/stiff | Xx | x | | |
| Soft | | | x | x |
| Slack | | | | |
| Strong | Xx | x | | |
| Normal | | | x | X |
| Weak | | | | |
| Sticky | | | | |
| Dry | X | X | X | X |
| | | | | |

| **Proof** | | | | |
|---|---|---|---|---|
| Fast | | | | |
| Slow | X | X | | |
| Normal | | | X | X |
| | | | | |

| **Report** | | | | |
|---|---|---|---|---|
| Volume trial 1 | 3840 | 3910 | 3830 | 4008 |
| Volume trial 2 | 3848 | 3971 | 3816 | 3972 |
| Volume trial 3 | 3889 | 3859 | 3902 | 4061 |
| Volume trial 4 | 3699 | 3949 | 3864 | 3976 |
| Volume (average) | 3819 | 3922 | 3853 | 4004 |
| Percentage | 100% | 103% | 101% | 105% |
| Crust colour | 7.25 | 7.5 | 8 | 8 |
| Character | 5 | 7 | 6.75 | 7.5 |
| Texture | 6 | 6.5 | 7 | 7.5 |
| Softness | 5.75 | 6.75 | 7.5 | 8 |
| Crumb colour | 8 | 8 | 8 | 8 |
| Smell/taste | 8 | 8 | 8 | 8 |
| | | | | |
| **Preference** | | | | * |

The results show that with the method according to the invention it is possible to prepare dough and finished bakery products with excellent properties by enriching a kneaded plain dough with particulates like meals, seeds and the like. This improves the flexibility for preparing dough varieties and thus also presents an improvement to bakeries to prepare a variety of bakery products with little additional efforts.

## Claims

1. Method for preparing a plurality of doughs of differing composition, preferably a bread doughs or pastry doughs, comprising:
(i) providing an amount of a kneaded dough, the plain dough, prepared by kneading dough ingredients comprising at least flour, a number of water sources, optionally a leavening agent and optionally lipids;
(ii) providing a composition, the enrichment mixture, comprising (a) edible particulates selected from one or more of grains, seeds, nuts, dried fruits, spices, herbs, pigments or products derived therefrom selected from parts, meals, powders, meal extrudates or meal pellets, (b) a number of carbohydrolases, preferably a number of endo-glucanases, (c) optionally lipids and (d) optionally further bakery additives;
(iii) mixing enrichment mixture through kneaded plain dough;
wherein the kneaded plain dough is divided into a plurality of portions and individual portions of the kneaded plain dough are treated differently by leaving portions of the kneaded plain dough untreated and/or by providing a plurality of enrichment mixtures having differing compositions and mixing differing enrichment mixtures through the portions of the kneaded plain dough.

2. Method according to claim 1, wherein the enrichment mixture comprises a number of lipids from a lipid source selected from vegetable oil or vegetable fat or combinations, for example in an amount such that the composition comprises 95-70, preferably 92-75, more preferably 90-80, most preferably 88-85 wt. % edible particulate dough additives and 5-30, preferably 8-25, more preferably 10-20, most preferably 12-15 wt. % lipid.

3. Use of an enrichment mixture, in preparing a plurality of bakery products of differing compositions, preferably breads or pastry, said enrichment mixture comprising:
(a) a number of edible particulates, selected from one or more of grains, seeds, nuts, dried fruits, spices, herbs, pigments or products derived therefrom selected from parts, meals, powders, meal extrudates or meal pellets;
(b) a number of carbohydrolases, preferably a number of endo-glucanases;
(c) optionally lipids and;
(d) optionally further bakery additives;
wherein in said use the enrichment mixture is added to a kneaded dough, preferably a kneaded white dough, or a kneaded pastry dough and the plurality of bakery products of differing compositions is prepared by:
(I) providing the enrichment mixture, optionally as a part of a plurality of enrichment mixtures having differing compositions;
(II) providing an amount of the kneaded dough, the plain dough, prepared by kneading dough ingredients comprising at least flour, a number of water sources, optionally a leavening agent and optionally lipids;
(III) dividing the kneaded plain dough into a plurality of portions;
(IV) differentially treating individual portions of the kneaded plain dough, by leaving portions of the plain dough untreated and/or by mixing differing enrichment mixtures through the portions of the kneaded plain dough;
and optionally
(V) processing enriched kneaded dough and/or plain dough to bread or pastry with processing steps comprising one or more of: incubating enriched dough and/or plain dough to leaven, portioning enriched dough and/or plain dough, baking enriched dough and/or plain dough.

4. Use according to claim 3, wherein the enrichment mixture comprises a number of lipids from a lipid source selected from vegetable oil or vegetable fat or combinations, for example in an amount such that the composition comprises 95-70, preferably 92-75, more preferably 90-80, most preferably 88-85 wt. % edible particulate dough additives and 5-30, preferably 8-25, more preferably 10-20, most preferably 12-15 wt. % lipid.

## Patentansprüche

1. Verfahren zur Herstellung einer Mehrzahl von Teigen mit unterschiedlicher Zusammensetzung, vorzugsweise von Brotteigen oder Gebäckteigen, wobei es Folgendes umfasst:
(i) Bereitstellen einer Menge eines gekneteten Teigs, des Grundteigs, welcher hergestellt wurde, indem Teigzutaten geknetet wurden, zu welchen mindestens Mehl, eine Reihe von Quellen für Wasser, möglicherweise ein Backtriebmittel und möglicherweise Fettstoffe gehören;
(ii) Bereitstellen einer Zusammensetzung, der Anreicherungsmischung, die (a) essbare Partikel, welche aus einem oder mehreren von Körnern, Samen, Nüssen, Trockenfrüchten, Gewürzen, Kräutern, Pigmenten oder davon abgeleiteten Produkten ausgewählt sind, welche wiederum aus Teilen, Mahlprodukten, Pulvern, Mahlproduktextrudaten oder Mahlproduktpresslingen ausgewählt sind, (b) eine Reihe von Carbohydrolasen, vorzugsweise eine Reihe von Endoglucanasen, (c) möglicherweise Fettstoffe und (d) möglicherweise weitere Backzusatzstoffe umfasst;
(iii) Beimischen der Anreicherungsmischung zu dem gekneteten Grundteig;
wobei der geknetete Grundteig in eine Mehrzahl von Portionen untergeteilt wird und einzelne Portionen des gekneteten Grundteigs unterschiedlich behandelt werden, indem Portionen des gekneteten Grundteigs unbehandelt gelassen werden und/oder indem eine Mehrzahl von Anreicherungsmischungen bereitgestellt wird, die unterschiedliche Zusammensetzungen haben, und unterschiedliche Anreicherungsmischungen den Portionen des gekneteten Grundteigs beigemischt werden.

2. Verfahren gemäß Anspruch 1, wobei die Anreicherungsmischung eine Reihe von Fettstoffen umfasst, die aus einer Fettstoffquelle stammen, welche aus einem Pflanzenöl oder Pflanzenfett oder Kombinationen ausgewählt ist, beispielsweise in einer Menge, die derart ist, dass die Zusammensetzung 95 bis 70, vorzugsweise 92 bis 75, insbesondere 90 bis 80, mit dem größten Vorzug 88 bis 85 Gew.-% an essbaren partikelförmigen Teigzusätzen und 5 bis 30, vorzugsweise 8 bis 25, insbesondere 10 bis 20, mit dem größten Vorzug 12 bis 15 Gew.-% an Fettstoffen umfasst.

3. Verwendung einer Anreicherungsmischung zum Herstellen einer Mehrzahl von Backwaren mit unterschiedlichen Zusammensetzungen, vorzugsweise Brotsorten oder Gebäck, wobei die Anreicherungsmischung Folgendes umfasst:
(a) eine Reihe von essbaren Partikeln, die aus einem oder mehreren von Körnern, Samen, Nüssen, Trockenfrüchten, Gewürzen, Kräutern, Pigmenten oder davon abgeleiteten Produkten ausgewählt sind, welche wiederum aus Teilen, Mahlprodukten, Pulvern, Mahlproduktextrudaten oder Mahlproduktpresslingen ausgewählt sind;
(b) eine Reihe von Carbohydrolasen, vorzugsweise eine Reihe von Endoglucanasen;
(c) möglicherweise Fettstoffe und;
(d) möglicherweise weitere Backzusatzstoffe;
wobei in dieser Verwendung die Anreicherungsmischung einem gekneteten Teig, vorzugsweise einem gekneteten weißen Teig, oder einem gekneteten Gebäckteig zugesetzt wird und die Mehrzahl an Backwaren mit unterschiedlichen Zusammensetzungen hergestellt wird, indem:
(I) die Anreicherungsmischung bereitgestellt wird, wobei sie möglicherweise Bestandteil einer Mehrzahl von Anreicherungsmischungen mit unterschiedlichen Zusammensetzungen ist;
(II) eine Menge des gekneteten Teigs, des Grundteigs, bereitgestellt wird, welcher hergestellt wurde, indem Teigzutaten geknetet wurden, zu welchen mindestens Mehl, eine Reihe von Quellen für Wasser, möglicherweise ein Backtriebmittel und möglicherweise Fettstoffe gehören;
(III) der geknetete Grundteig in eine Mehrzahl von Portionen unterteilt wird;
(IV) einzelne Portionen des gekneteten Grundteigs unterschiedlich behandelt werden, indem Portionen des Grundteigs unbehandelt bleiben und/oder indem den Portionen des gekneteten Grundteigs unterschiedliche Anreicherungsmischungen beigemischt werden;
und möglicherweise
(V) der angereicherte geknetete Teig und/oder Grundteig zu Brot oder Gebäck verarbeitet wird, wobei die Verarbeitungsschritte einen oder mehrere der folgenden umfassen: Inkubieren des angereicherten Teigs und/oder Grundteigs, damit dieser aufgeht, Portionieren des angereicherten Teigs und/oder Grundteigs, Backen des angereicherten Teigs und/oder Grundteigs.

4. Verwendung gemäß Anspruch 3, wobei die Anreicherungsmischung eine Reihe von Fettstoffen umfasst, die aus einer Fettstoffquelle stammen, welche aus einem Pflanzenöl oder Pflanzenfett oder Kombinationen ausgewählt ist, beispielsweise in einer Menge, die derart ist, dass die Zusammensetzung 95 bis 70, vorzugsweise 92 bis 75, insbesondere 90 bis 80, mit dem größten Vorzug 88 bis 85 Gew.-% an essbaren partikelförmigen Teigzusätzen und 5 bis 30, vorzugsweise 8 bis 25, insbesondere 10 bis 20, mit dem größten Vorzug 12 bis 15 Gew.-% an Fettstoffen umfasst.

## Revendications

1. Méthode de préparation d'une pluralité de pâtes de composition différente, préférablement de pâtes à pain ou de pâtes à pâtisserie, comprenant :
(i) la mise à disposition d'une quantité d'une pâte pétrie, la pâte nature, préparée par le pétrissage d'ingrédients de pâte comprenant au moins de la farine, un certain nombre de sources d'eau, éventuellement un agent levant et éventuellement des lipides ;
(ii) la mise à disposition d'une composition, le mélange d'enrichissement, comprenant (a) des matières particulaires comestibles choisies parmi un(e) ou plusieurs parmi des grains, des graines, des noix, des fruits séchés, des épices, des herbes aromatiques, des pigments ou des produits en étant dérivés choisis parmi des parties, des farines, des poudres, des extrudats de farine ou des pellets de farine, (b) un certain nombre de carbohydrolases, préférablement un certain nombre d'endoglucanases, (c) éventuellement des lipides et (d) éventuellement d'autres additifs de boulangerie ;
(iii) le malaxage du mélange d'enrichissement dans la pâte nature pétrie ;
dans laquelle la pâte nature pétrie est divisée en une pluralité de portions et des portions individuelles de la pâte nature pétrie sont traitées différemment en laissant des portions de la pâte nature pétrie non traitées et/ou en mettant à disposition une pluralité de mélanges d'enrichissement ayant des compositions différentes et en mélangeant les différents mélanges d'enrichissement dans les portions de la pâte nature pétrie.

2. Méthode selon la revendication 1, dans laquelle le mélange d'enrichissement comprend un certain nombre de lipides issus d'une source lipidique choisie parmi une huile végétale ou une matière grasse végétale ou des combinaisons, par exemple selon une quantité telle que la composition comprend 95-70, préférablement 92-75, plus préférablement 90-80, tout préférablement 88-85% en poids d'additifs de pâte particulaires comestibles et 5-30, préférablement 8-25, plus préférablement 10-20, tout préférablement 12-15% en poids de lipides.

3. Utilisation d'un mélange d'enrichissement, dans la préparation d'une pluralité de produits de boulangerie de compositions différentes, préférablement des pains ou de la pâtisserie, ledit mélange d'enrichissement comprenant :
(a) un certain nombre de matières particulaires comestibles, choisies parmi un(e) ou plusieurs parmi des grains, des graines, des noix, des fruits séchés, des épices, des herbes aromatiques, des pigments ou des produits en étant dérivés choisis parmi des parties, des farines, des poudres, des extrudats de farine ou des pellets de farine ;
(b) un certain nombre de carbohydrolases, préférablement un certain nombre d'endoglucanases ;
(c) éventuellement des lipides ; et
(d) éventuellement d'autres additifs de boulangerie ;
où dans ladite utilisation, le mélange d'enrichissement est ajouté à une pâte pétrie, préférablement une pâte blanche pétrie ou une pâte de pâtisserie pétrie, et la pluralité de produits de boulangerie de compositions différentes est préparée par :
(I) la mise à disposition du mélange d'enrichissement, éventuellement comme partie d'une pluralité de mélanges d'enrichissement ayant des compositions différentes ;
(II) la mise à disposition d'une quantité de la pâte pétrie, la pâte nature, préparée par le pétrissage d'ingrédients de pâte comprenant au moins de la farine, un certain nombre de sources d'eau, éventuellement un agent levant et éventuellement des lipides ;
(III) la division de la pâte nature pétrie en une pluralité de portions ;
(IV) le traitement différentiel des portions individuelles de la pâte nature pétrie, en laissant des portions de la pâte nature non traitées et/ou en mélangeant des mélanges d'enrichissement différents dans les portions de la pâte nature pétrie ;
et éventuellement
(V) la transformation de la pâte pétrie enrichie et/ou de la pâte nature en pain ou pâtisserie par des étapes de transformation comprenant une ou plusieurs parmi : l'incubation de pâte enrichie et/ou de pâte nature pour qu'elle lève, la mise en portions de la pâte enrichie et/ou de la pâte nature, la cuisson de la pâte enrichie et/ou de la pâte nature.

4. Utilisation selon la revendication 3, dans laquelle le mélange d'enrichissement comprend un certain nombre de lipides issus d'une source lipidique choisie parmi une huile végétale ou une matière grasse végétale ou des combinaisons, par exemple selon une quantité telle que la composition comprend 95-70, préférablement 92-75, plus préférablement 90-80, tout préférablement 88-85% en poids d'additifs de pâte particulaires comestibles et 5-30, préférablement 8-25, plus préférablement 10-20, tout préférablement 12-15% en poids de lipides.
